(19) Europäisches Patentamt
European Patent Office
Office européen des brevets

(11) **EP 2 475 108 A1**

(12) **EUROPEAN PATENT APPLICATION**

(43) Date of publication:
**11.07.2012 Bulletin 2012/28**

(51) Int Cl.:
**H04B 7/06** (2006.01)

(21) Application number: **11360003.5**

(22) Date of filing: **07.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventor: **Wong, Shin Homg**
**Chippenham**
**Wiltshire, SN14 0SP (GB)**

(74) Representative: **Coghlan, Judith Elizabeth Kensy et al**
**Bryer, Shelley, John Amor, Greenwood LLP**
**7 Gay Street**
**Bath BA1 2PH (GB)**

(54) **Uplink transmit diversity feedback**

(57)     A method of transmitting user equipment uplink feedback transmit diversity feedback information to be communicated by a base station to user equipment in a wireless telecommunication network, a base station operable to perform that method, and a computer program product operable to perform that method. The user equipment is operable to transmit a signal on a radio channel on at least two antenna. The method comprises the steps of:

receiving an uplink signal from the user equipment at the base station;

estimating, based on the received uplink signal, an indication of uplink channel radio condition for the radio channel on the at least two antenna;

determining an antenna weighting calculated to maximise received quality of overall uplink signal at the base station based on the estimated radio uplink channel radio condition; and

encoding and transmitting said determined antenna weighting to the user equipment on a downlink physical control channel comprising an E-HICH or E-RGCH.

Such an approach allows downlink feedback information to be sent to user equipment in an economical manner without the need to provide a new physical channel designed to carry transmit diversity feedback information. Such an approach allows the need for new transmission and reception chain hardware at base stations and user equipment to be avoided.

**FIGURE 11 :**

Squeezing additional information bits in a slot of an
E-HICH/E-RGCH channel

**Description**

FIELD OF THE INVENTION

The present invention relates to a method of transmitting user equipment uplink feedback transmit diversity information, a base station and a computer program product.

BACKGROUND

Wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station. In a high-speed packet access (HSPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

In known wireless HSPA telecommunication systems, user equipment can move between geographical base station coverage areas. Service provided to user equipment is overseen by a radio network controller (RNC). The radio network controller communicates with user equipment and base stations and determines which base station, and which cell of the geographical area served by that base station each user equipment is primarily connected to (known as the "serving cell"). Furthermore, a radio network controller acts to control and communicate with a base station and user equipment when user equipment moves from the geographical area served by one base station to a geographical area served by another base station.

A signal transmitted between user equipment and a base station over a radio channel typically experiences many propagation paths, for example, due to reflection, before arriving at a base station receiver. The signal carried on those paths each arrive at a different time, power and phase at the receiver. The sum of the different signal propagation paths at the receiver causes the total signal received to attenuate or amplify depending on the phases of the different received propagation paths. Changes to the transmitter position or the transmitter surroundings causes the multiple propagation path signals to change, leading to fluctuation in the signal at the receiver. This characteristic is known as multipath fading or fast fading. Fast fading causes the signal to fluctuate over even a short time span. A signal may suffer significant attenuation due to fading or deep fade. A signal that has undergone deep fade may not be decodable.

Transmit diversity (TxDiv), is a method according to which a signal can be transmitted over two or more antennas. If a signal transmitted by a first antenna experiences a deep fade, the same signal transmitted on another antenna, typically experiences different radio conditions and propagation paths and may arrive with good quality.

Uplink transmit diversity at user equipment requires more than one antenna to be provided, and that a signal may be sent to a base station on one or more of those antenna. The signal arriving at a base station from two antenna may be combined by the base station and can thus result in a diversity gain at the base station of the transmitted signal. Further, if the signal transmitted using one antenna is particularly affected by fast fading, a signal transmitted using another antenna may be less affected by fast fading.

The requirements of a user having uplink transmission diversity may be contrary to other requirements in place within a network. Those requirements may conflict, leading to decreased efficiency of data transfer within a wireless telecommunication network as a whole.

Accordingly, it is desired to improve the robustness of a wireless telecommunications network having uplink transmit diversity functionality.

SUMMARY

According to a first aspect, there is provided a method of transmitting user equipment uplink feedback transmit diversity information to be communicated by a base station to user equipment in a wireless telecommunication network, the user equipment being operable to transmit a signal on a radio channel on at least two antenna, the method comprising the steps of:

receiving an uplink signal from the user equipment at the base station;
estimating, based on the received uplink signal, an indication of uplink channel radio condition for the radio channel on the at least two antenna;
determining an antenna weighting calculated to maximise received quality of overall uplink signal at the base station based on the estimated radio uplink channel radio condition; and
encoding and transmitting the determined antenna weighting to the user equipment on a downlink physical control channel comprising an E-HICH or E-RGCH.

The first aspect recognises that transmit diversity (TxDiv), is a method according to which a signal can be transmitted over two or more antennas, and that method may allow for improved communication between user equipment and a base station by offering a chance to overcome or mitigate the likelihood of fast fading degrading a signal to the extent it is no longer decodable. If a signal transmitted by a first antenna experiences a deep fade, the same signal transmitted on another antenna, typically experiences different radio conditions and propagation paths and may arrive with good quality.

In an implementation of uplink transmit diversity at user equipment, a signal $S$ is duplicated and each copy is multiplied by a weight. Signals $S_1$ and $S_2$ are produced by multiplying weight $W_1$ and $W_2$ respectively by the copy of signal $S$. Each of those signals is then transmitted via a different antenna. The signals $S_1$ and $S_2$ as received at a base station are combined by the base station and can thus result in a diversity gain at the base station of signal $S$.

TxDiv schemes can use various methods to determine the weights $W_1$ and $W_2$. It is possible to allow a base station to determine appropriate weights $W_1$ and $W_2$ directly rather than allowing user equipment to choose. Since the radio channels that signals $S_1$ and $S_2$ propagate through can be estimated at a base station (BS), the base station is able to determine the weights $W_1$ and $W_2$ that can maximize the received quality of signal $S$, after combining signal $S_1$ and $S_2$, at that base station. The choice of weights $W_1$ and $W_2$ selected by the base station will need to be explicitly signalled to user equipment. Embodiments described are directed to a manner of determining a (downlink) feedback channel to carry information relating to TxDiv weights.

The first aspect recognizes that since TxDiv operates at the physical layer, a physical channel shall be used to carry the feedback. A new physical channel could be designed to carry a feedback channel including the weights. However, this would require a new transmission chain at each base station, operable to encode the new channel, together with a new receiving chain at user equipment to allow decoding of the new channel. Furthermore, additional conformance tests may be required for a new channel.

In particular, the first aspect recognizes that complexity can be reduced if an existing downlink physical control channel can be re-used to carry transmit diversity feedback. The feedback channel is expected to be used by a large number of user equipment, very frequently, analogous to the transmission of TPC commands. The channel thus needs to be "economical" in the use of resources (for example, codespace). Hence, an existing downlink channel that is not "economical" like HS-SCCH (High Speed Shared Control Channel) and DPCH (Dedicated Physical Channel) should not be used. Existing channels which are economical in use of resources and are designed for frequent transmission to a large number of user equipment include: the F-DPCH (Fractional Dedicated Physical Channel), E-HICH (E-DCH Hybird ARQ Indicator Channel) and E-RGCH (E-DCH Relative Grant Channel). E-HICH and E-RGCH use the same physical channel format.

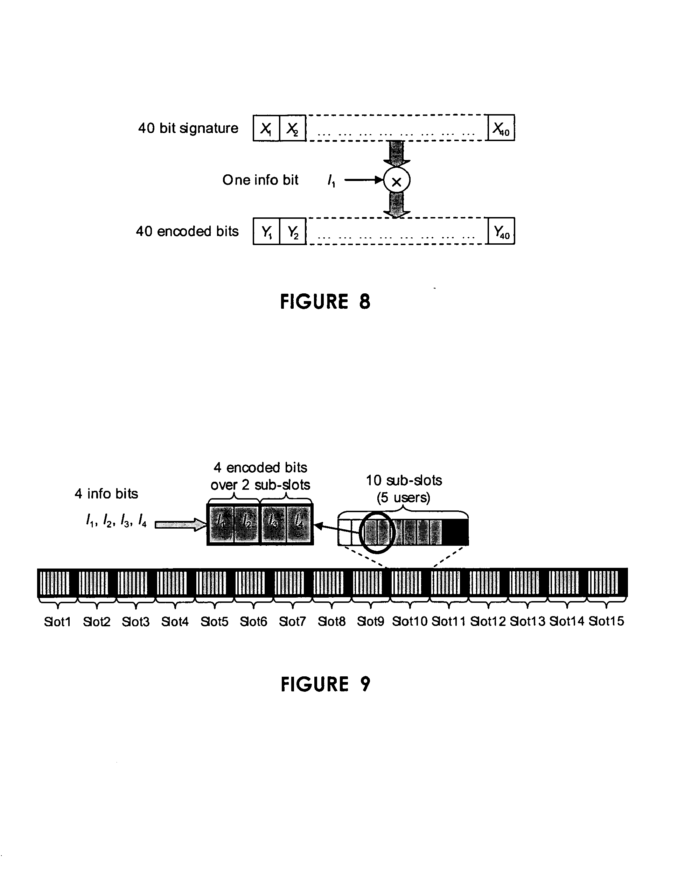

Figure 8 shows the encoding process in E-HICH/E-RGCH within a time slot. E-HICH carries a 1 bit acknowledgement information, whilst E-RGCH carries 1 bit grant information.

As shown, the 1 information bit $I_1$ in E-HICH/E-RGCH is multiplied or spread with a 40 bits signature {$X_1$, $X_2$, ..., $X_{40}$} giving 40 encoded bits {$Y_1$, $Y_2$, ..., $Y_{40}$} in each slot. This is repeated over the TTI (3 slots for 2 ms TTI) using different signature, giving $3\times$ repetition gain. The encoded bits are further spread using a SF128 OVSF code. In each physical channel (i.e. a SF128 code), the E-HICH/E-RGCH contains 40 signatures (each 40 bits long) thereby supporting 40 feedbacks. Typically, the E-HICH and E-RGCH, destined to the same user, are encoded in the same physical channel and are differentiated using different signatures. This enables the user equipment to search for only one SF128 OVSF code to extract 2 different feedbacks (i.e. acknowledgement carried by E-HICH and grant carried by E-RGCH). Hence, the 40 different signatures in a physical channel can support 20 users (i.e. 20 E-HICH and 20 E-RGCH).

Accordingly, an E-HICH/E-RGCH offers a suitable candidate for transmission of transmit diversity feedback information to user equipment. Re-use of existing downlink physical control channels allows downlink feedback information to be sent to user equipment in an economical manner without the need to provide a new physical channel designed specifically to carry transmit diversity feedback information. Such an approach allows the need for new transmission and reception chain hardware at base stations and user equipment to be avoided.

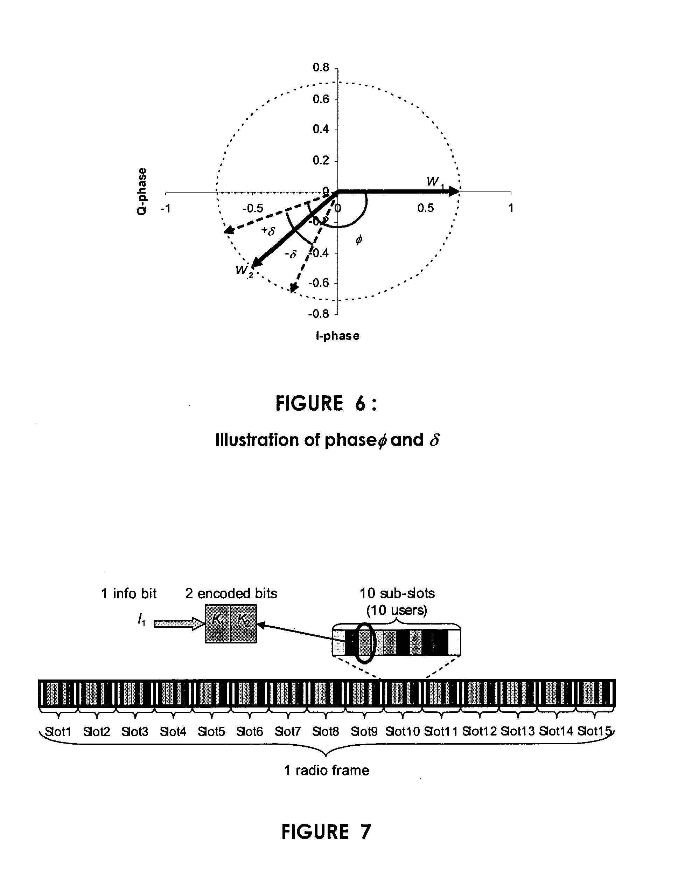

In one embodiment, the downlink physical control channel comprises an F-DPCH. Accordingly, in a radio frame (10 ms), the F-DPCH is divided into 15 slots and in each slot, it is further divided into 10 sub-slots as shown in Figure 7. Each sub-slot is used to carry 1 bit of TPC feedback to a user (or USER EQUIPMENT) and this feedback is updated for the same user in every slot. Hence, a F-DPCH physical channel can provide feedback to 10 users. The 1 information bit (shown as $I_1$ in Figure 7) carrying the TPC is encoded into 2 bits via repetition and it is further spread using a SF (Spreading Factor) 256 OVSF (Orthogonal Variable Spreading Factor) code.

It can thus be understood that an F-DPCH offers a particularly economical physical control channel on which to transmit diversity feedback information to user equipment without adversely affecting overall network performance.

In one embodiment, the determined antenna weighting comprises an indication of which of the at least two antenna the user equipment is to transmit. It will be appreciated that in order to implement transmit diversity at user equipment, both Switched Antenna TxDiv (SATD) and Beam Forming TxDiv (BFTD) are possible.

In SATD, user equipment can only transmit via one antenna at a time and hence the possible values for $W_1$ and $W_2$ are 1 or 0. This avoids having an additional costly power amplifier (PA) in the UE. The weights are only logical representation but from an implementation point of view, a simple switch can be used. Therefore, for SATD, the index size $N$ is 2, which can be indicated with only 1 bit. As a result, the weighting can simply comprise an indication of which antenna user equipment ought to use.

In one embodiment, the determined antenna weighting comprises an indication to the user equipment to implement one of a predetermined set of relative antenna weightings. Accordingly, it will be understood that in BFTD schemes, a codebook or look up table comprising a set of predetermined relative weights is used. In close loop TxDiv, a base station operates to select the best predetermined weights based on radio channel estimations. Accordingly, the determined antenna weighting transmitted to user equipment may comprise a reference to a particular pre-determined codebook weighting for each of said provided antenna.

In one embodiment, the determined antenna weighting comprises an indication of a predetermined change in relative phase between signals to be transmitted on the at least two antenna. It will be understood that for user equipment having a two transmit branch, only the phase difference between the weight vectors affects the gains. An example of a transmit diversity scheme may thus implement a scheme in which the value of one weight, i.e. $W_1(n)$ is fixed and the phase of the other weight, i.e. $W_2(n)$ is varied in relation to $W_1(n)$. Thus in order to change antenna weightings, an indication of whether to increase or decrease the phase of the second weight in relation to the first by a predetermined increment or plurality of increments can be sent.

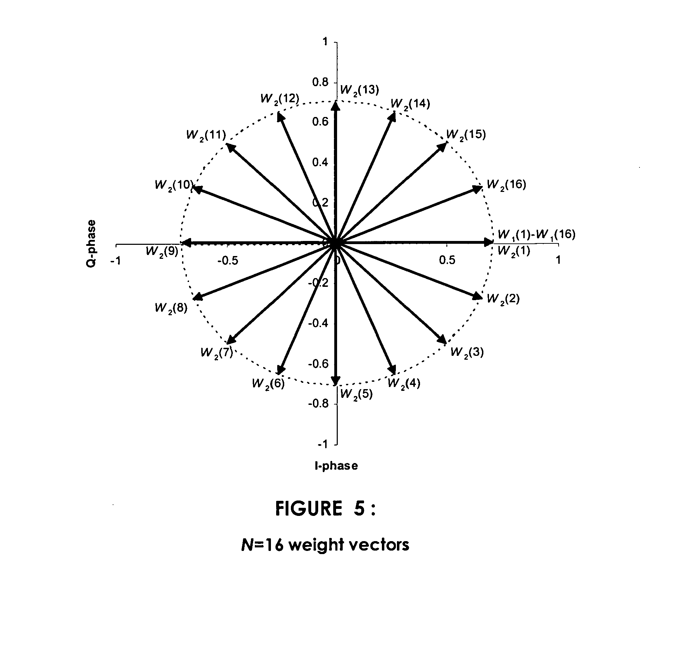

By way of example, Figure 5 illustrates schematically a set of transmission antenna weights according to one embodiment. The codebook shown in Figure 5 is a $N$=16 codebook in which the first weight $W_1(n)$, is fixed for $n$= 1 to 16 whilst the phase for the second weight varies.

A non-codebook BFTD can be implemented for TxDiv in which the first weight is fixed and the phase of the second weight, $\phi$ changes by $\pm\delta$, the instruction to change up or down by an increment of phase being issued by a base station to user equipment.

By way of example, Figure 6 illustrates schematically a set of transmission antenna weights according to one embodiment, for a 2 branch uplink TxDiv capable user equipment. In the embodiment illustrated, a first weight is denoted as $W_1$ and is fixed. The phase between $W_1$ and the second weight $W_2$ is $\phi$, where $\phi$ can increase or decrease by $\delta$ changing $W_2$ to the dashed vectors shown in Figure 6. In some, open loop, solutions, the UE decides whether to increase or decrease the phase $\phi$ by $\delta$ based on the TPC. For a close loop solution, a base station signals to user equipment to increase or decrease the phase $\phi$ by $\delta$ based on uplink radio channel estimation.

It will be appreciated that for beam forming transmit diversity that does not use a codebook the user equipment need only to know whether to increase or decrease the phase $\phi$ by $\delta$. Thus, only a +$\delta$ or a -$\delta$ is required and an increase or decrease instruction is required to be sent to the user equipment. Use of existing physical channels such as F-DPCH and E-HICH/E-RGCH allows such an increase or decrease message to be sent using economical methods to user equipment. Although it will be appreciated that a possible drawback of such a method is that a base station is unable to change the phase $\phi$ by a large amount in one step, the number of feedbacks could be reduced by allowing a base station to vary the size of the increase and decrease step instructions. For example, a base station could be operable in some embodiments to increase the phase difference between weightings by $\delta$, 2$\delta$, 3$\delta$ or 4$\delta$ in a single feedback. It will be appreciated that such feedback may require more information bits in order to send more detailed information.

In one embodiment, the determined antenna weighting comprises a single information bit to be encoded. In one embodiment, the determined antenna weighting comprises two information bits to be encoded. In one embodiment, the determined antenna weighting comprises more than two information bits to be encoded. Accordingly, it will be appreciated that, depending on the transmit diversity scheme implemented by a user equipment and base station, be it a switched or beam forming arrangement, different information bits will be required to be sent between a base station and user equipment.

In one embodiment, the transmission of the encoded determined antenna weighting is repeated within a pre-determined transmit time interval. Accordingly, by repeating a determined antenna weighting it will be appreciated that a user equipment receiving a downlink signal including such antenna weightings can achieve some processing gain and is more likely to be able to successfully receive the downlink signal.

In one embodiment, if the determined antenna weighting calculated to maximize received quality of overall uplink signal at the base station comprises no change to an antenna weighting being implemented by the user equipment, no encoding and transmitting step occurs. Accordingly, unnecessary signaling within the network is thereby minimized.

In one embodiment, the determined antenna weighting is encoded and transmitted within a single radio frame sub-slot. Accordingly, necessary information is transmitted to user equipment as often as necessary to ensure transmit diversity feedback is regularly fed back to user equipment, thus potentially optimizing operation of the transmit diversity functionality within a wireless telecommunications network. Such an embodiment may particularly use an F-DPCH physical channel.

In one embodiment, the determined antenna weighting is encoded and transmitted across a plurality of radio frame sub-slots. Accordingly, if a greater number of information bits is required to encode a suitable antenna weighting, that information may be encoded across a plurality of radio frame sub-slots.

In one embodiment, the determined antenna weighting is encoded and transmitted across a plurality of consecutive radio frame sub-slots. Accordingly, it will be appreciated that although the sub-slots need not be continuous, it is easiest from an implementation point of view if they are continuous. More sub-slots can be combined if higher numbers of information bits are required. The number of information bits per sub-slot need not be the same for a given user. That is to say, a first sub-slot can have two information bits, for example, and a second sub-slot may include only one information bit. Each information bit may benefit from a repetition. Different numbers of information bits can be supported with different combinations of numbers of information bits per sub-slot and the number of sub-slots allocated per user.

In one embodiment, the step of encoding comprises the step of multiplication of information bits relating to a determined antenna weighting by an orthogonal variable spreading factor code, identifiable by the user equipment. User equipment typically continuously monitors for all physical channels configured by the network. In a received signal, user equipment will typically search for all possible physical channels by using an OVSF code assigned to particular physical channels. The larger the number of physical channels, the more searches user equipment may require to make. The more searches user equipment is required to make, the more this increases user equipment complexity. Thus, to reduce the number of searches, transmission diversity feedback for user equipment should avoid using a separate physical channel, ie using a different OVSF code, to those channels which already exist. Use of existing OVSF code, or one which is already being searched for by user equipment, thus may operate to ensure that a network operates with efficient and minimized redundant signaling.

In one embodiment, the encoding step comprises a step of multiplication of information bits relating to the determined antenna weighting by a signature operable to allow the user equipment to distinguish information encoded within a downlink transmission as transmission diversity feedback information. Accordingly, it will be appreciated that use of a signature may allow transmission diversity feedback information to be sent in parallel to any information normally carried by dedicated physical control channels, such as an F-DPCH and/or an E-HICH/E-RGCH. Appropriate use of signatures, for example by splitting signatures or by according particular signatures to particular types of information carried by each channel, may allow efficient re-use and sharing of dedicated physical control channels within a network. Use of signatures may be of use when using an E-HICH/E-RGCH as a physical channel. In one embodiment, the encoded and transmitted determined antenna weighting uses a different radio frame sub-slot on the downlink physical control channel to that used for transmit power control signaling, grant information, or similar information encoded on said downlink physical control channel. Accordingly, a physical channel may be shared such that transmit diversity feedback can be supported and TPC commands and grant information can be sent on existing channels in parallel. It will be appreciated that not all user equipment support transmit diversity and, hence, channel signatures, spreading codes and similar can be correctly managed such that the physical channels are fully occupied and redundant signaling within the network is minimized.

A second aspect provides a computer program product operable, when executed on a computer, to perform the method of the first aspect.

A third aspect provides a base station operable to transmit user equipment uplink feedback transmit diversity information to be communicated by the base station to user equipment in a wireless telecommunication network, the user equipment being operable to transmit a signal on a radio channel on at least two antenna, the base station comprising:

reception logic operable to receive an uplink signal from the user equipment at the base station;
channel estimation logic, operable to estimate, based on the received uplink signal, an indication of uplink channel radio condition for the radio channel on the at least two antenna;
determination logic, operable to determine an antenna weighting calculated to maximise received quality of overall uplink signal at the base station based on the estimated radio uplink channel radio condition; and
transmission logic operable to encode and transmit the determined antenna weighting to the user equipment on a downlink physical control channel comprising an E-HICH or E-RGCH.

In one embodiment, the downlink physical control channel comprises an F-DPCH.

In one embodiment, the determination logic is operable to determine an antenna weighting comprising an indication of which of the at least two antenna the user equipment is to transmit.

In one embodiment, the determination logic is operable to determine an antenna weighting comprising an indication to the user equipment to implement one of a predetermined set of relative antenna weightings.

In one embodiment, the determination logic is operable to determine an antenna weighting comprising an indication of a predetermined change in relative phase between signals to be transmitted on the at least two antenna.

In one embodiment, the determined antenna weighting comprises a single information bit to be encoded.

In one embodiment, the determined antenna weighting comprises two information bits to be encoded.

In one embodiment, the determined antenna weighting comprises more than two information bits to be encoded.

In one embodiment, the transmission logic is operable to repeat transmission of the encoded determined antenna weighting within a predetermined transmit time interval.

In one embodiment, the transmission logic is operable, if said determined antenna weighting calculated to maximise received quality of overall uplink signal at said base station comprises no change to an antenna weighting being implemented by said user equipment, to ensure no encoding and transmitting step occurs.

In one embodiment, the transmission logic is operable to encode and transmit the determined antenna weighting within a single radio frame sub-slot.

In one embodiment, the transmission logic is operable to encode and transmit the determined antenna weighting across a plurality of radio frame sub-slots.

In one embodiment, the transmission logic is operable to encode and transmit the determined antenna weighting across a plurality of consecutive radio frame sub-slots.

In one embodiment, the transmission logic is operable to perform an encoding step comprising a step of multiplication of information bits relating to the determined antenna weighting by an orthogonal variable spreading factor (OSVF) code, identifiable by the user equipment.

In one embodiment, the transmission logic is operable to perform an encoding step comprising a step of multiplication of information bits relating to the determined antenna weighting by a signature operable to allow the user equipment to distinguish information encoded within a downlink transmission as transmission diversity feedback information.

In one embodiment, the transmission logic is operable to encode and transmit the determined antenna weighting by using a different radio frame sub-slot on the downlink physical control channel to that used for transmit power control signalling, grant information or similar information encoded on the downlink physical control channel.

Aspects described herein manipulate existing physical channels to carry TxDiv feedback by employing one or more of the following features in combination: Reusing F-DPCH and E-HICH/E-RGCH.

Sharing TxDiv feedback info with TPC in the same code (i.e. F-DPCH).

Sharing TxDiv feedback info with acknowledgement and grants in the same code (i.e. E-HICH and E-RGCH).

The TxDiv feedback and the TPC or acknowledgment/grants in the same code have different feedback rates.

The TxDiv feedback and the TPC or acknowledgment/grants in the same code have same feedback rates.

The TxDiv feedback can have different power offset to TPC or acknowledgement/grants in the same code.

The TxDiv feedback can have different number of information bits to TPC or acknowledgement/grant. Here concatenation of different slots, multiplexing and usage of different signature sequences (i.e. for E-HICH/E-RGCH) to carry the bits can be used.

TxDiv feedback channel for beamforming can indicate the step size change to the beamforming weight. A 0 step size or multiple step sizes can be used.

TxDiv feedback can be used by non-serving cell.

Further particular and preferred aspects are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 illustrates a wireless telecommunications system according to one embodiment;
Figure 2 illustrates schematically typical propagation paths between a transmitter and a receiver;
Figure 3 illustrates fast fading of a signal power for user equipment moving at 3 Kmph for a signal operating in 2000 MHz;
Figure 4 illustrates schematically an implementation of uplink transmit diversity at user equipment;
Figure 5 illustrates schematically a set of transmission antenna weights according to one embodiment;
Figure 6 illustrates schematically a set of transmission antenna weights according to one embodiment;
Figures 7 to 14 illustrate schematically various aspects of uplink transmission diversity weighting message formats for transmission by a base station in a HSPA network;
Figure 15 illustrates schematically use of signatures to encode feedback information according to one embodiment; and

Figure 16 illustrates schematically an embodiment of uplink Switched Antenna Transmission Diversity.

DETAILED DESCRIPTION OF THE DRAWINGS

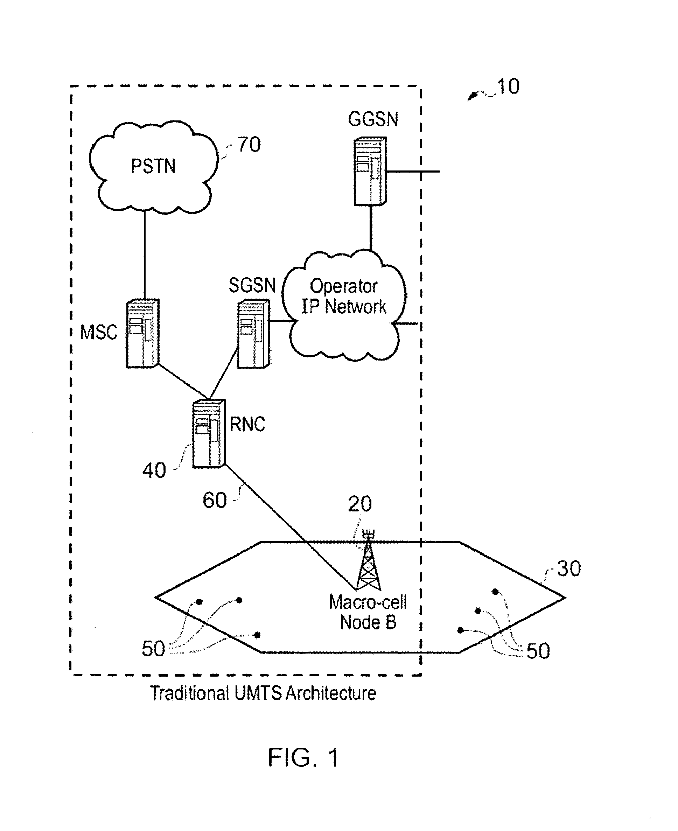

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

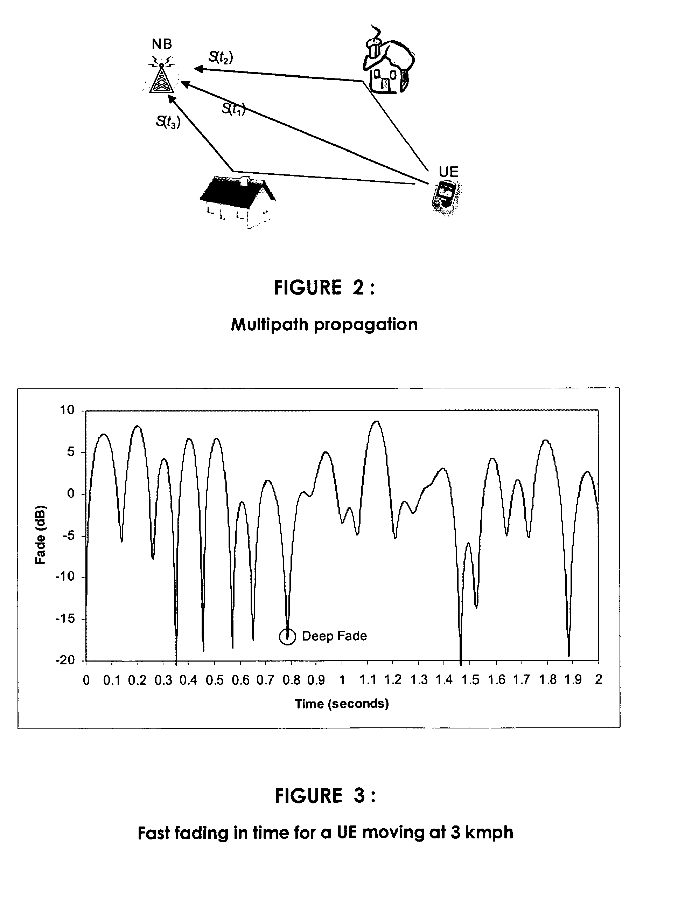

Figure 2 illustrates schematically typical propagation paths between a transmitter, in this case, user equipment 50 and a receiver on a base station 20. A signal transmitted over a radio channel typically experiences many propagation paths, for example, due to reflection, before arriving at a receiver. Those signal paths are represented as $S(t_1)$, $S(t_2)$, and $S(t_3)$ in Figure 2, and each arrive at different time, power and phase at the receiver. The sum of the different signal propagation paths at the receiver causes the total signal received to attenuate or amplify depending on the phases of the different received propagation paths.

Changes to the transmitter position or the transmitter surroundings causes the multiple propagation path signals to change, leading to fluctuation in the signal at the receiver. This characteristic is known as multipath fading or fast fading.

Figure 3 illustrates fast fading of a signal power for user equipment moving at 3 kmph for a signal operating in 2000 MHz. Fast fading causes the signal to fluctuate over even a short time span. A signal may suffer significant attenuation due to fading or deep fade. A deep fade is shown in Figure 3, and is ringed by a circle. That deep fade attenuates the signal by 17 dB. A signal that has undergone deep fade may not be decodable.

Transmit diversity (TxDiv), is a method according to which a signal can be transmitted over two or more antennas. If a signal transmitted by a first antenna experiences a deep fade, the same signal transmitted on another antenna, typically experiences different radio conditions and propagation paths and may arrive with good quality.

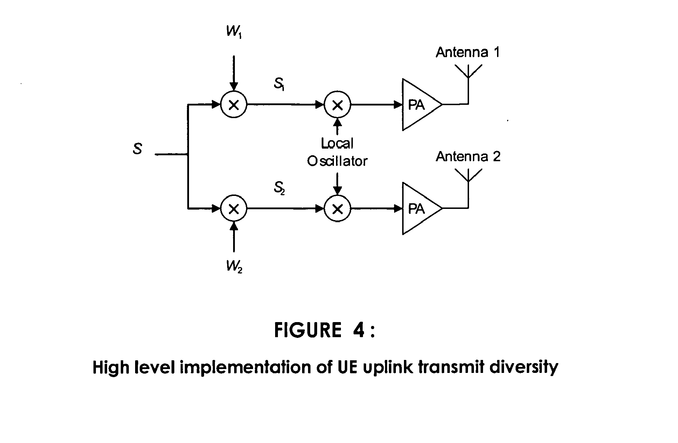

Figure 4 illustrates schematically an implementation of uplink transmit diversity at user equipment. As shown in Figure 4, a signal $S$ is duplicated and each copy is multiplied by a weight. Signals $S_1$ and $S_2$ are produced by multiplying weight $W_1$ and $W_2$ respectively by the copy of signal $S$. Each of those signals is then transmitted via a different antenna. The signals $S_1$ and $S_2$ as received at a base station are combined by the base station and can thus result in a diversity gain at the base station of signal $S$.

Possible TxDiv schemes use an open loop method to determine the weights $W_1$ and $W_2$, and determination of those weights at user equipment is based on received Transmit Power Control (TPC) commands issued by a serving base station (BS). Since TPC is used for the purpose of power control, the indirect use of TPC to determine the TxDiv weights does not give a true reflection of the uplink radio condition and the chosen weights may have impact on non-serving cells, leading to small gains.

It is possible to allow a base station to determine appropriate weights $W_1$ and $W_2$ instead of user equipment.

The radio channels that signals $S_1$ and $S_2$ propagate through can be estimated at a base station (BS) and once the radio channels are known, the base station is able to determine weights $W_1$ and $W_2$ that can maximize the received quality of signal $S$, after combining signal $S_1$ and $S_2$. It is expected that such a scheme will offer higher gain than that offered by open loop TxDiv utilizing TPC commands. The choice of weights $W_1$ and $W_2$ selected by the base station will need to be explicitly signalled to user equipment. The manner in which a base station determines and signals a choice of weights is described further in relation to Figures 7 to 14.

An HSPA network allows for increased data throughput in the uplink by allowing user equipment to communicate with more than one base station. That is to say, any packet transmitted by user equipment may be received at more than one base station. The network, and specifically RNC, is able to combine the packets received by different base stations, and thus can help ensure communication between user equipment and the network as a whole is more robust. That scenario is known as soft handover (SHO) and comprises a collection of cells, supported by one or more base stations, communicating with one user equipment.

The cells participating in SHO of a UE belong to an "Active Set" of the UE. In HSPA, within the Active Set, there will be one main cell serving the UE, referred to as a "serving cell". Other cells that are not the serving cells are called the non-serving cells. If the cells in the Active Set belong to the same base station as that which hosts the serving cell, this is termed "Softer Handover".

In a High Speed Uplink Packet Access (HSUPA) network having uplink transmission diversity functionality, an uplink data transmission from user equipment will typically with to use SHO, thus allowing for more robust communication with the network as a whole.

Uplink Transmission Diversity (TxDiv) weights are determined based on radio channels between user equipment and a receiver at a base station. Since the radio channels between the UE antennas and each of the cells (NB receive antennas) in the Active Set are different, each cell will request different TxDiv weights from given user equipment.

User equipment is, however, typically operable to apply only one set of weights to its transmission. If an overall inappropriate weight is chosen, based on the recommendation of a single base station in a user equipment active set, the weights used may degrade the reception of some cells.

## UPLINK TRANSMIT DIVERSITY - OVERVIEW

The set of values that the weights $W_1$ and $W_2$ shown in Figure 4, may take is infinite. A large number of bits would be required to feedback the actual values of the weights $W_1$ and $W_2$ to user equipment, causing a huge amount of network traffic. To minimize unnecessary signalling within the network 10, a finite set of weight values is chosen and a base station feeds back to user equipment only an index to a set of values (ie, a reference in a look up table).

Let **W** be the set of weights, for user equipment having two transmit antennas, as follows:

$$\mathbf{W} = \begin{Bmatrix} W_1(1) & W_2(1) \\ W_1(2) & W_2(2) \\ M & M \\ W_1(n) & W_2(n) \\ M & M \\ W_1(N) & W_2(N) \end{Bmatrix}$$

Where, $n$ is the index to a pair of weight $W_1$ and $W_2$. N is number of possible pairs of weights that a base station may choose.

A base station will typically evaluate each of the $N$ pair of weights in the set **W** against the estimated radio channel to find the best pair of weights to be use in the next uplink transmission. A base station then signals the "best" index $n$ to user equipment. User equipment is provided with a look up table comprising the same set of weights, **W** and will apply the weights indicated by the index $n$ to the transmit signal for each antenna. Hence, the number of bits required in the feedback channel is the number of bits required to represent $N$ indices.

## TRANSMIT DIVERSITY SCHEMES

In order to implement transmit diversity at user equipment, both Switched Antenna TxDiv (SATD) and Beam Forming TxDiv (BFTD) are possible.

In SATD, user equipment can only transmit via one antenna at a time and hence the possible values for $W_1$ and $W_2$ are 1 or 0. This avoids having an additional costly power amplifier (PA) in the UE. The weights are only logical representation but from an implementation point of view, a simple switch. Therefore, for SATD, the index size $N$ is 2, which can be indicated with only 1 bit.

In BFTD, a codebook or look up table comprising a set of predetermined relative weights is used. In close loop TxDiv, a base station operates to select the best predetermined weights based on radio channel estimations.

For user equipment having a two transmit branch, only the phase difference between the weight vectors affect the gains. An example implementation is to fix the value of one weight, i.e. $W_1(n)$ and vary the phase of the other weight, i.e. $W_2(n)$ in relation to $W_1(n)$.

Figure 5 illustrates schematically a set of transmission antenna weights according to one embodiment. The codebook shown in Figure 5 is a $N$=16 codebook in which the first weight $W_1(n)$, is fixed for $n$= 1 to 16 whilst the phase for the second weight varies.

A non-codebook BFTD can be implemented for open loop TxDiv in which the first weight is fixed and the phase of the second weight, $\phi$ changes by $\pm\delta$, the instruction to change up or down by an increment of phase being issued by a base station to user equipment.

Figure 6 illustrates schematically a set of transmission antenna weights according to one embodiment, for a 2 branch uplink TxDiv capable user equipment. In the embodiment illustrated, a first weight is denoted as $W_1$ and is fixed. The phase between $W_1$ and the second weight $W_2$ is $\phi$, where $\phi$ can increase or decrease by $\delta$ changing $W_2$ to the dashed vectors shown in Figure 6. In some, open loop, solutions, the UE decides whether to increase or decrease the phase $\phi$ by $\delta$ based on the TPC. For a close loop solution, a base station signals to user equipment to increase or decrease the phase $\phi$ by $\delta$ based on uplink radio channel estimation.

## PHYSICAL CHANNELS FOR TxDiv FEEDBACK

Since TxDiv operates at the physical layer, a physical channel shall be used to carry the feedback. A new physical channel could be designed to carry a feedback channel including the weights. However, this would require a new transmission chain at each base station, operable to encode the new channel, together with a new receiving chain at user equipment to allow decoding of the new channel. Furthermore additional conformance tests may be required for a new channel.

Complexity can be reduced if an existing downlink physical control channel can be re-used to carry transmit diversity feedback. The feedback channel is expected to be used by a large number of user equipment, very frequently, analogous to the transmission of TPC commands. The channel thus needs to be "economical" in the use of resources (for example, codespace). Hence, an existing downlink channel that is not "economical" like HS-SCCH (High Speed Shared Control Channel) and DPCH (Dedicated Physical Channel) should not be used. Existing channels which are economical in use of resources and are designed for frequent transmission to a large number of user equipment include: the F-DPCH (Fractional Dedicated Physical Channel), E-HICH (E-DCH Hybird ARQ Indicator Channel) and E-RGCH (E-DCH Relative Grant Channel). E-HICH and E-RGCH use the same physical channel format.

In a radio frame (10 ms), the F-DPCH is divided into 15 slots and in each slot, it is further divided into 10 sub-slots as shown in Figure 7. Each sub-slot is used to carry 1 bit of TPC feedback to a user (or USER EQUIPMENT) and this feedback is updated for the same user in every slot. Hence, a F-DPCH physical channel can provide feedback to 10 users. The 1 information bit (shown as $I_1$ in Figure 7) carrying the TPC is encoded into 2 bits via repetition and it is further spread using a SF (Spreading Factor) 256 OVSF (Orthogonal Variable Spreading Factor) code.

Figure 8 shows the encoding process in E-HICH/E-RGCH within a time slot. E-HICH carries a 1 bit acknowledgement information, whilst E-RGCH carries 1 bit grant information.

As shown, the 1 information bit $I_1$ in E-HICH/E-RGCH is multiplied or spread with a 40 bits signature $\{X_1, X_2, ..., X_{40}\}$ giving 40 encoded bits $\{Y_1, Y_2, ..., Y_{40}\}$ in each slot. This is repeated over the TTI (3 slots for 2 ms TTI) using different signature, giving 3x repetition gain. The encoded bits are further spread using a SF128 OVSF code. In each physical channel (i.e. a SF128 code), the E-HICH/E-RGCH contains 40 signatures (each 40 bits long) thereby supporting 40 feedbacks. Typically, the E-HICH and E-RGCH, destined to the same user, are encoded in the same physical channel and are differentiated using different signatures. This enables the user equipment to search for only one SF128 OVSF code to extract 2 different feedbacks (i.e. acknowledgement carried by E-HICH and grant carried by E-RGCH). Hence, the 40 different signatures in a physical channel can support 20 users (i.e. 20 E-HICH and 20 E-RGCH).

## TRANSMIT DIVERSITY FEEDBACK CHANNELS

In order to implement transmit diversity at user equipment, both Switched Antenna TxDiv (SATD) and Beam Forming TxDiv (BFTD) are possible.

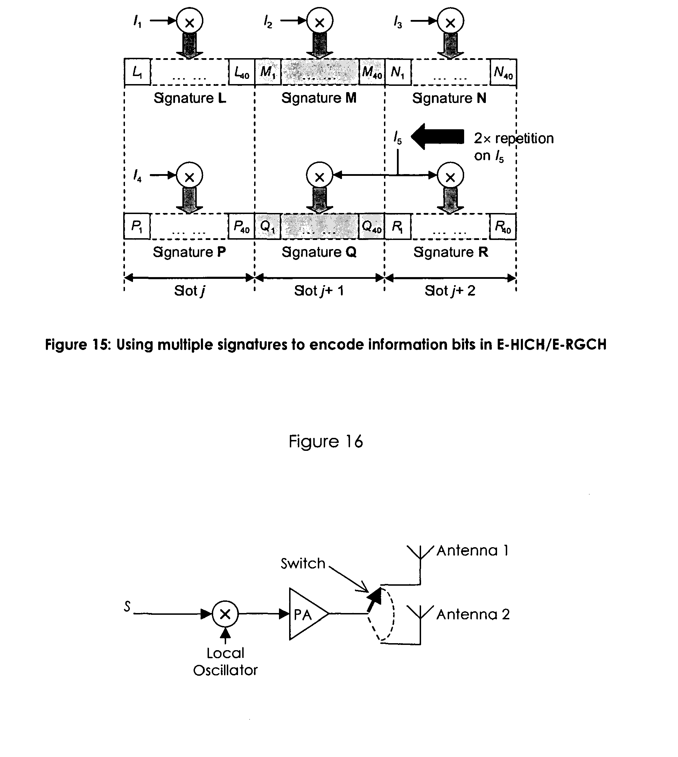

Figure 16 illustrates schematically an embodiment of uplink Switched Antenna Transmission Diversity. In SATD, user equipment can only transmit via one antenna at a time and hence the possible values for $W_1$ and $W_2$ are 1 or 0. This avoids having an additional costly power amplifier (PA) in the UE. The weights are only logical representation but from an implementation point of view, a simple switch as shown in Figure 4. Therefore, for SATD, the index size $N$ is 2, which can be indicated with only 1 bit.

In BFTD, a codebook or look up table comprising a set of predetermined relative weights is used. In close loop TxDiv, a base station operates to select the best predetermined weights based on radio channel estimations.

In BFTD, the index sizes evaluated from an encoding perspective are $N$=8 and $N$=30. For the $N$=8 scenario, a codebook, which is a lookup table matching the index n to the weights $W_1$ and $W_2$, is used. In the later case where $N$ = 30, a codebook is not used. Here one of the weights, i.e. $W_1$ is fixed and only the phase value of the other weight, i.e. $W_2$ is changed. Hence only the phase difference, $\phi$ between $W_1$ and $W_2$ are changed and it is changed by a fixed value $\delta$. Such an implementation is illustrated schematically in Figure 6, where the vectors $W_1$ and $W_2$ are shown and the phase between $W_1$ and $W_2$ is $\phi$. The phase for $W_2$ can be decreased or increased by $\delta$, which is indicated by dashed lines. User equipment decides, based on an algorithm, whether to increase or decrease the phase $\phi$ by $\delta$.

For SATD with two transmit antenna, an index size $N$=2 (1 bit) is required. Hence F-DPCH and E-HICH/E-RGCH are suitable since these physical channels carry 1 information bit. No changes are required for E-HICH/E-RGCH and a feedback channel using the same format as E-HICH/E-RGCH would have the same performance as these physical channels. For F-DPCH, since 3 information bits are available for each user in a 2 ms TTI (3 slots), the index n can be repeated 3 times and a feedback channel using the F-DPCH format would have a 3x gain in performance over the F-DPCH physical channel carrying only TPC in every slot.

For BFTD, if a codebook is used for the weights, the estimated index size is 8. This requires 3 bits, which can be handled by the F-DPCH format without any changes since 3 information bits are contained in a 2 ms TTI (3 slots). For E-HICH/E-RGCH format, each slot, in a 2 ms TTI (3 slots), needs to carry an information bit. Using this will cost the system to lose the $3\times$ repetition gain that exists in the original E-HICH/E-RGCH format. This loss can be compensated by having higher power (for example, a different power offset) for the TxDiv feedback. It will be appreciated that this is a loss compared to the original usage of E-HICH/E-RGCH. However, the performance may or may not be similar to F-DPCH depending on the particular implementation.

For BFTD that does not use a codebook, such as that shown in Figure 6, the user equipment needs only to know whether to increase or decrease the phase $\phi$ by $\delta$. Hence only a +$\delta$ or a -$\delta$ is required to be sent which requires only 1 bit. The usage of F-DPCH and E-HICH/E-RGCH is hence similar to those used for a two transmit antenna SATD described above. A drawback of using this method is that a base station is unable to change the phase $\phi$ by a large amount. For example, to increase the phase $\phi$ by 5$\delta$, the base station needs to send five +$\delta$ feedbacks to the user equipment.

The number of feedbacks can be reduced by having more available indicatable steps. For example a base station could increase the phase $\phi$ by $\pm\delta$, $\pm2\delta$, $\pm3\delta$ or $\pm4\delta$ in a single feedback. Such increased steps requires a feedback of 3 bits (for 8 different step sizes). For 8 step sizes, the same encoding method used for index size $N$=8 in BFTD described above can be used.

If there is no change to the antenna used in SATD, the weight index or the phase $\phi$ in BFTD, a base station can DTX (Discontinuously Transmit) the feedback. That is, the base station need not send a feedback if there is no change. This will reduce the amount of feedback transmission within the network, 10, which will lead to lower interference. However, if the previous feedback is incorrectly decoded, an absence of a feedback from a base station will cause user equipment to continuously use the wrong antenna (SATD) or weight (BFTD). Such an error may need correction by a base station.

Higher index size can be supported by F-DPCH and E-HICH/E-RGCH channels if : more than 2 transmit antenna are used in SATD, a larger codebook is used in BFTD or more step sizes for the phase $\phi$ change. However, this may lower the performances of these channels. For example F-DPCH can forgo the 2x repetition per sub-slot to have 2 information bits per sub-slot giving a total of 6 information bits over 3 slots for each user. This is sufficient for an index size of 64, which is more than enough. LTE max index size is only 16.

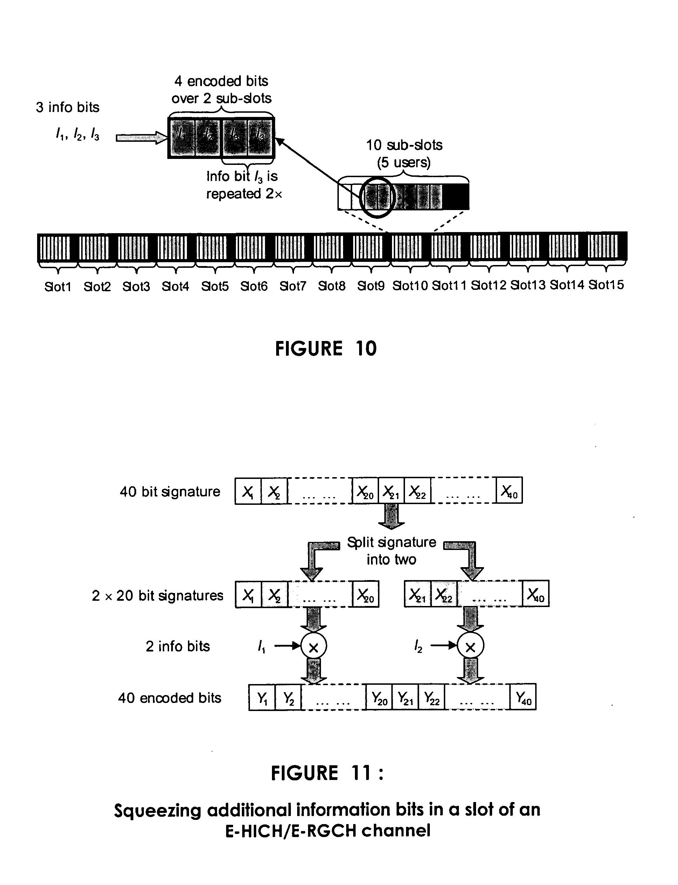

Further increases, albeit unlikely, can be achieved by combining F-DPCH sub-slots as shown in Figure 9. Here two sub-slots are used to feedback 4 information bits $\{I_1, I_2, I_3, I_4\}$ to a user. The sub-slots need not be continuous but it is easier from an implementation point of view if they are. More sub-slots can be combined if a higher number of information bit is required. The number of information bit per sub-slot need not be the same for a user. In Figure 10, 3 information bits $\{I_1, I_2, I_3\}$ are required, the 1st sub-slot can have 2 information bits $\{I_1, I_2\}$ whilst the 2nd sub-slot has 1 information bit $\{I_3\}$. Information bit $I_3$ benefits from a 2x repetition. Different number of information bits can be supported with different combinations of number of information bits per sub-slot and the number of sub-slots per user.

To support higher number of information bits in E-HICH/E-RGCH, 2 information bits can be squeezed into each slot. Here instead of encoding a single information bit into a 40 bit signature as in Figure 8, each of the two information bits will take up half of the 40 bit signature as shown in Figure 11. As shown in Figure 11, 40 bit signature pattern is indicated as $\{X_1, X_2, ..., X_{40}\}$ and in the information bits are indicated as $\{I_1, I_2\}$. Information $I_1$ is multiplied (or spread) by the first 20 bits of the (40 bit) signature, i.e. $\{X_1, X_2, ..., X_{20}\}$, whilst $I_2$ is multiplied by the remaining 20 bits of the signature, i.e. $\{X_{21}, X_{22}, ..., X_{40}\}$. The encoded message $\{Y_1, Y_2, ..., Y_{40}\}$ still contains 40 bits. Higher number of information bits can be further squeezed by multiply each information bit to a different section of the 40 bit signature.

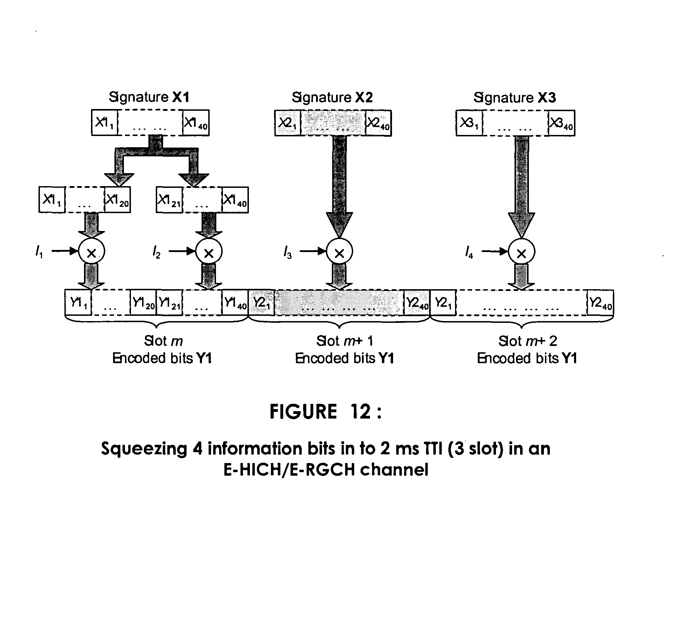

Similar to F-DPCH, each slot can squeeze in different number of information bits, for example, as shown in Figure 12, 4 information bits $\{I_1, I_2, I_3, I_4\}$ are required and the signatures for the 3 slots, namely, Slot $m$, Slot $m$+1 and Slot $m$+2 are **X1** $=\{X1_1, X1_2, ..., X1_{40}\}$, **X2**$=\{X2_1, X2_2, ..., X2_{40}\}$ and **X3**$=\{X3_1, X3_2, ..., X3_{40}\}$ respectively. Information bits $I_1$ and $I_2$ are encoded into Slot m by splitting the signature **X1**, where $I_1$ is spread using $\{X1_1, X1_2, ..., X1_{20}\}$ whilst $I_2$ is spread using $\{X1_{21}, X1_{22}, ..., X1_{40}\}$. Information bit $I_3$ and $I_4$ are encoded into Slot $m$+1 and Slot $m$+2 respectively where $I_3$ is spread using **X2** and $I_4$ is spread using **X3**. The encoded bits in Slot $m$, Slot $m$+1 and Slot $m$+2 are **Y1**, **Y2** and **Y3** respectively where in each slot they are 40 encoded bits. Different combinations of number of bits per slot can be used to encode the required number of information bits. Squeezing more information bits into a slot will degrade the channel performance leading to lower coverage.

Figure 15 illustrates schematically use of signatures to encode feedback information according to one embodiment. According to the embodiment illustrated, different signature sequences can be used to support a higher number of information bits in E-HICH/E-RGCH. In the example of Figure 15, if 5 information bits ($I_1, I_2, I_3, I_4. I_5$) are required per 2ms TTI, then the first 3 bits $I_1, I_2$ and $I_3$ can use signatures **L**, **M** and **N** respectively, which belongs to the same sequence. For the remaining 2 bits, $I_4$ uses signature **P** whilst $I_5$ can be repeated twice and uses signatures **Q** and **R**. Signatures **P**, **Q** and **R** belong to the same sequence (different to that for signatures **L**, **M** and N).

The encoding described so far is for 2 ms TTI HSUPA operation. For 10 ms TTI operation, the encoded bits can be repeated 5x or if higher number of bit is required, the available slots (or sub-slots) can be used to encode different information bits. This is applicable for F-DPCH and E-HICH/E-RGCH.

Feedback rate of more than a TTI is also possible. In this case, it is possible to time multiplex different users in the same code, sub-frame (in F-DPCH) and signature sequence (in E-HICH/E-RGCH).

## SHARING TRANSMIT DIVERSITY FEEDBACK IN A PHYSICAL CHANNEL

User equipment typically needs to continuously monitor for messages sent on all physical channels configured by the network. In a received signal, user equipment will search for a possible physical channel by using an OVSF code assigned to the physical channel. The larger the number of physical channels, the more searches user equipment is required to make, thus increasing user equipment complexity. To reduce the number of searches, TxDiv feedback to user equipment should avoid using a separate physical channel (i.e. a different OVSF code). However, this does not restrict the TxDiv feedback to user equipment from using a separate physical channel.

In F-DPCH, the TPC command and the TxDiv feedback can use different sub-slots within the same F-DPCH physical channel. That is one SF256 OVSF code contains feedbacks for TPC and TxDiv for one or more user equipment. In a manner similar to TPC command, the sub-slot and OVSF code used for TxDiv feedback can be signalled to user equipment. Since there are 10 sub-slots in a F-DPCH slot, the maximum number of TxDiv capable user equipment that can be supported is 5 (2 sub-slots for each UE). Sharing TxDiv feedback with TPC commands in a F-DPCH may reduce the number of users that can be supported by F-DPCH. However, for the same number of user equipment, the number of F-DPCH channels required to send TPC command and TxDiv feedbacks is not affected.

E-HICH and E-RGCH share the same OVSF code on the physical channel for the same user equipment and are distinguished by different signatures. Similarly, the TxDiv feedback can share the same OVSF code (i.e. physical channel) as E-HICH and E-RGCH to the same user equipment by using a different signature. The OVSF code and signature for TxDiv feedback is signaled to user equipment. There are 40 signatures in a code where in the same code the E-HICH and E-RGCH are sent to user equipment. To signal the TxDiv in the same code as E-HICH and E-RGCH, 3 signatures are required per user equipment. Hence, a single code can support 39 TxDiv capable user equipment. This will leave a single signature unused, which can be assigned as TxDiv for different user equipment at the expense that the user equipment will need to search for two physical channels to get its E-HICH, E-RGCH and TxDiv feedback. Since not all user equipment may support TxDiv, the signatures can be fully occupied if it is managed properly by the network. Furthermore if multiple signature sequences are used as in Figure 15, the code can also be fully occupied.

The use of F-DPCH and E-HICH/E-RGCH format also allows non-serving cells to signal their TxDiv feedbacks to user equipment in soft handover. A summary of the physical channels used are in Table 1. Although E-HICH/E-RGCH offers higher processing gain (10 dB) than that of F-DPCH, E-HICH/E-RGCH is expected to share up to 40 uses/users (e.g. grant, ACK/NACK and TxDiv feedback) within a code and depending on its usage, on a per code basis its overall gain may be lower than that of F-DPCH. The F-DPCH format supports less UEs than that of E-HICH/E-RGCH format and this is true even after factoring for the code space (i.e. 2xSF256 F-DPCH codes vs. 1 xSF128 E-HICH/E-RGCH code).

**Table 1: Summary of physical channels used for TxDiv feedback**

| TxDiv Schemes | N | Info Bits | F-DPCH | | | E-HICH/E-RGCH | | |
|---|---|---|---|---|---|---|---|---|
| | | | SF | Gain* (dB) | UE[†]/Code | SF | Gain* (dB) | /UE[†]/Code |
| 2Tx SATD | 2 | 1 | 256 | 31.9 | 5 | 128 | 41.9 | 13 |
| BFTD (non-codebook) | 2 | 1 | 256 | 31.9 | 5 | 128 | 41.9 | 13 |
| BFTD (codebook) | 8 | 3 | 256 | 27.1 | 5 | 128 | 37.1 | 13 |
| NOTE: * Processing Gain (assuming 2 ms TTI) [†] Number of UEs using the code (or channel) to carry TxDiv feedback in addition to their original usage (e.g. TPC or E-HICH & E-RGCH) | | | | | | | | |

**Example 1**

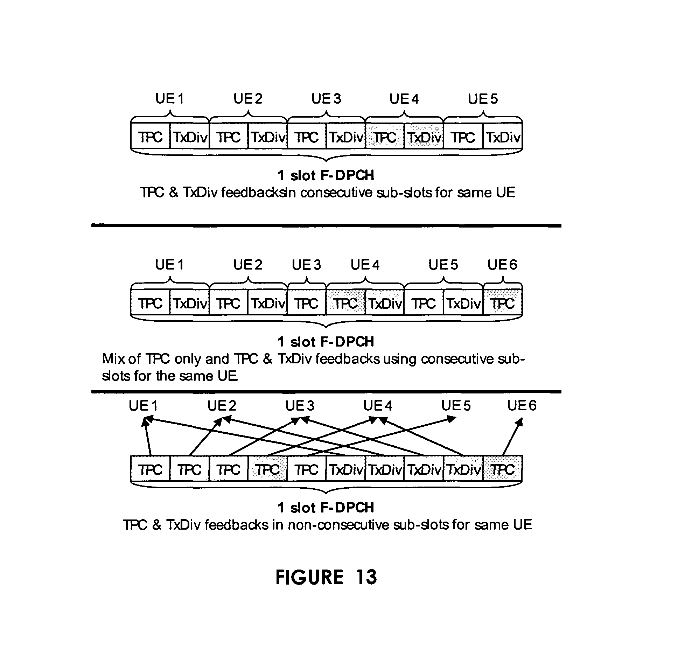

Examples of the use of F-DPCH physical channel to carry TPC and TxDiv feedback are shown in Figure 13. In the upper part of Figure 22, two consecutive sub-slots are assigned for a user (or user equipment). The 1st sub-slot is for TPC command and the 2nd sub-slot is for the TxDiv feedback.

It is expected that a network will consist of user equipment with and without TxDiv capability and an example of this case is shown in the middle part of Figure 13. Here UE3 and UE6 do not support TxDiv and therefore need only TPC commands from the BASE STATION whilst UE1, UE2, UE4 and UE5 uses consecutive sub-slots to carry the TPC and TxDiv feedbacks.

A non-consecutive arrangement can be used, as shown in the lower part of Figure 13. Here sub-slots 1 to 5 are used to carry TPC for UE1 to UE5 whilst sub-slots 6 to 9 are used to carry TxDiv feedback for UE1 to UE4. UE 5 and UE6 are not configured for TxDiv and hence only TPC commands are sent to these UEs.

Figure 13 illustrates examples of sharing TPC and TxDiv in the same F-DPCH for the same user equipment. Other arrangements can be used, and do not exclude the use of a separate F-DPCH for TxDiv feedbacks.

**Example 2**

An example of the use of E-HICH/E-RGCH format to carry the TxDiv feedback is shown in Figure 23. Here for UE1, E-HICH, E-RGCH and TxDiv feedback use signatures **X1**, **X11** and **X21** respectively whilst for UE2, E-HICH, E-RGCH and TxDiv feedback use signatures **X2**, **X12** and **X22** respectively. UE3 is not configured with TxDiv and hence it only uses signatures **X3** and **X13** for E-HICH and E-RGCH respectively.

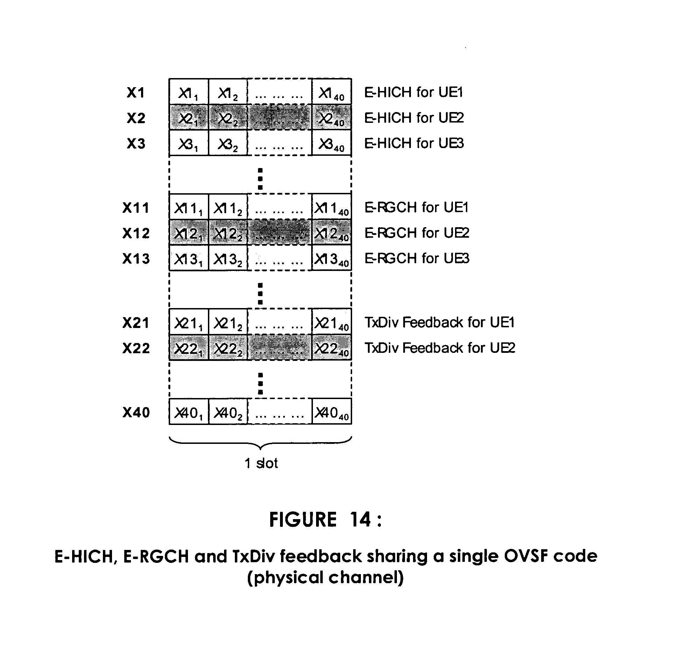

Figure 14 is an example and does not exclude the use of a different codes to carry the TxDiv feedback and E-HICH/E-RGCH.

**Summary**

Aspects described herein manipulate existing physical channels to carry TxDiv feedback by employing one or more of the following:

Reusing F-DPCH and E-HICH/E-RGCH.
Sharing TxDiv feedback info with TPC in the same code (i.e. F-DPCH).
Sharing TxDiv feedback info with acknowledgement and grants in the same code (i.e. E-HICH and E-RGCH).
The TxDiv feedback and the TPC or acknowledgment/grants in the same code have different feedback rates.
The TxDiv feedback and the TPC or acknowledgment/grants in the same code have same feedback rates.
The TxDiv feedback can have different power offset to TPC or acknowledgement/grants in the same code.
The TxDiv feedback can have different number of information bits to TPC or acknowledgement/grant. Here concatenation of different slots, multiplexing and usage of different signature sequences (i.e. for E-HICH/E-RGCH) to carry the bits can be used.
TxDiv feedback channel for beamforming can indicate the step size change to the beamforming weight. A 0 step size or multiple step sizes can be used.
TxDiv feedback can be used by non-serving cell.

A person of skill in the art would readily recognize that steps of various above-described methods can be performed by programmed computers. Herein, some embodiments are also intended to cover program storage devices, e.g. digital data storage media, which are machine or computer readable and encode machine-executable or computer-executable programs of instructions, wherein said instructions perform some or all of the steps of said above-described methods. The program storage devices may be, e.g. digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of transmitting user equipment uplink feedback transmit diversity information to be communicated by a base station to user equipment in a wireless telecommunication network, said user equipment being operable to transmit a signal on a radio channel on at least two antenna, said method comprising the steps of:

   receiving an uplink signal from said user equipment at said base station;
   estimating, based on said received uplink signal, an indication of uplink channel radio condition for said radio channel on said at least two antenna;
   determining an antenna weighting calculated to maximise received quality of overall uplink signal at said base station based on said estimated radio uplink channel radio condition; and
   encoding and transmitting said determined antenna weighting to said user equipment on a downlink physical control channel comprising an E-HICH or E-RGCH.

2. A method of transmitting user equipment uplink feedback transmit diversity information according to claim 1, wherein said downlink physical control channel comprises an F-DPCH.

3. A method of transmitting user equipment uplink feedback transmit diversity information according to any preceding claim, wherein said determined antenna weighting comprises an indication of which of said at least two antenna said user equipment is to transmit.

4. A method of transmitting user equipment uplink feedback transmit diversity information according to claim 1 or claim 2, wherein said determined antenna weighting comprises an indication to said user equipment to implement one of a predetermined set of relative antenna weightings.

5. A method of transmitting user equipment uplink feedback transmit diversity information according to claim 1 or claim 2, wherein said determined antenna weighting comprises an indication of a predetermined change in relative phase between signals to be transmitted on said at least two antenna.

6. A method of transmitting user equipment uplink feedback transmit diversity information according to any preceding claim, wherein said transmission of said encoded determined antenna weighting is repeated within a predetermined transmit time interval.

7. A method of transmitting user equipment uplink feedback transmit diversity information according to any preceding claim, wherein if said determined antenna weighting calculated to maximise received quality of overall uplink signal at said base station comprises no change to an antenna weighting being implemented by said user equipment, no encoding and transmitting step occurs.

8. A method of transmitting user equipment uplink feedback transmit diversity information according to any preceding claim, wherein said determined antenna weighting is encoded and transmitted within a single radio frame sub-slot.

9. A method of transmitting user equipment uplink feedback transmit diversity information according to any one of claims 1 to 7, wherein said determined antenna weighting is encoded and transmitted across a plurality of radio frame sub-slots.

10. A method of transmitting user equipment uplink feedback transmit diversity information according to claim 9, wherein said determined antenna weighting is encoded and transmitted across a plurality of consecutive radio frame sub-slots.

11. A method of transmitting user equipment uplink feedback transmit diversity information according to any preceding claim, wherein said encoding step comprises a step of multiplication of information bits relating to said determined antenna weighting by an orthogonal variable spreading factor (OSVF) code, identifiable by said user equipment.

12. A method of transmitting user equipment uplink feedback transmit diversity information according to any preceding claim, wherein said encoding step comprises a step of multiplication of information bits relating to said determined antenna weighting by a signature operable to allow said user equipment to distinguish information encoded within a downlink transmission as transmission diversity feedback information.

13. A method of transmitting user equipment uplink feedback transmit diversity information according to any preceding claim, wherein said encoded and transmitted determined antenna weighting uses a different radio frame sub-slot on said downlink physical control channel to that used for transmit power control signalling, grant information or similar information encoded on said downlink physical control channel.

14. A computer program product operable, when executed on a computer, to perform the method of any one of claims 1 to 13.

15. A base station operable to transmit user equipment uplink feedback transmit diversity information to be communicated by said base station to user equipment in a wireless telecommunication network, said user equipment being operable to transmit a signal on a radio channel on at least two antenna, said base station comprising:

   reception logic operable to receive an uplink signal from said user equipment at said base station;
   channel estimation logic, operable to estimate, based on said received uplink signal, an indication of uplink channel radio condition for said radio channel on said at least two antenna;
   determination logic, operable to determine an antenna weighting calculated to maximise received quality of overall uplink signal at said base station based on said estimated radio uplink channel radio condition; and
   transmission logic operable to encode and transmit said determined antenna weighting to said user equipment on a downlink physical control channel comprising an E-HICH or E-RGCH.

FIG. 1

**FIGURE 2 :**

**Multipath propagation**

**FIGURE 3 :**

**Fast fading in time for a UE moving at 3 kmph**

**FIGURE 4 :**

**High level implementation of UE uplink transmit diversity**

FIGURE 5 :

*N*=16 weight vectors

**FIGURE 6 :**

**Illustration of phase $\phi$ and $\delta$**

1 info bit   2 encoded bits          10 sub-slots
                                      (10 users)

$I_1$      $K_1$  $K_2$

Slot1  Slot2  Slot3  Slot4  Slot5  Slot6  Slot7  Slot8  Slot9  Slot10  Slot11  Slot12  Slot13  Slot14  Slot15

1 radio frame

**FIGURE 7**

40 bit signature $X_1$ $X_2$ ... ... ... ... ... ... $X_{40}$

One info bit $I_1$ → ⊗

40 encoded bits $Y_1$ $Y_2$ ... ... ... ... ... ... ... $Y_{40}$

## FIGURE 8

4 info bits

$I_1$, $I_2$, $I_3$, $I_4$

4 encoded bits over 2 sub-slots

10 sub-slots (5 users)

Slot1 Slot2 Slot3 Slot4 Slot5 Slot6 Slot7 Slot8 Slot9 Slot10 Slot11 Slot12 Slot13 Slot14 Slot15

## FIGURE 9

EP 2 475 108 A1

## FIGURE 10

## FIGURE 11 :

### Squeezing additional information bits in a slot of an E-HICH/E-RGCH channel

21

FIGURE 12 :

Squeezing 4 information bits in to 2 ms TTI (3 slot) in an
E-HICH/E-RGCH channel

UE 1　　UE 2　　UE 3　　UE 4　　UE 5

| TPC | TxDiv | TPC | TxDiv | TPC | TxDiv | TPC | TxDiv | TPC | TxDiv |

**1 slot F-DPCH**

TPC & TxDiv feedbacks in consecutive sub-slots for same UE

UE 1　　UE 2　　UE 3　　UE 4　　UE 5　　UE 6

| TPC | TxDiv | TPC | TxDiv | TPC | TPC | TxDiv | TPC | TxDiv | TPC |

**1 slot F-DPCH**

Mix of TPC only and TPC & TxDiv feedbacks using consecutive sub-slots for the same UE

UE 1　　UE 2　　UE 3　　UE 4　　UE 5　　UE 6

| TPC | TPC | TPC | TPC | TPC | TxDiv | TxDiv | TxDiv | TxDiv | TPC |

**1 slot F-DPCH**

TPC & TxDiv feedbacks in non-consecutive sub-slots for same UE

## FIGURE 13

| | | | | | |
|---|---|---|---|---|---|
| **X1** | $X1_1$ | $X1_2$ | ... ... ... | $X1_{40}$ | E-HICH for UE1 |
| **X2** | $X2_1$ | $X2_2$ | | $X2_{40}$ | E-HICH for UE2 |
| **X3** | $X3_1$ | $X3_2$ | ... ... ... | $X3_{40}$ | E-HICH for UE3 |

⋮

| | | | | | |
|---|---|---|---|---|---|
| **X11** | $X11_1$ | $X11_2$ | ... ... ... | $X11_{40}$ | E-RGCH for UE1 |
| **X12** | $X12_1$ | $X12_2$ | | $X12_{40}$ | E-RGCH for UE2 |
| **X13** | $X13_1$ | $X13_2$ | ... ... ... | $X13_{40}$ | E-RGCH for UE3 |

⋮

| | | | | | |
|---|---|---|---|---|---|
| **X21** | $X21_1$ | $X21_2$ | ... ... ... | $X21_{40}$ | TxDiv Feedback for UE1 |
| **X22** | $X22_1$ | $X22_2$ | | $X22_{40}$ | TxDiv Feedback for UE2 |

⋮

| | | | | |
|---|---|---|---|---|
| **X40** | $X40_1$ | $X40_2$ | ... ... ... | $X40_{40}$ |

1 slot

## FIGURE 14 :

### E-HICH, E-RGCH and TxDiv feedback sharing a single OVSF code (physical channel)

**Figure 15: Using multiple signatures to encode information bits in E-HICH/E-RGCH**

Figure 16

Europäisches
Patentamt

European
Patent Office

Office européen
des brevets

## EUROPEAN SEARCH REPORT

Application Number

EP 11 36 0003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/107699 A2 (INTERDIGITAL PATENT HOLDINGS [US]; PELLETIER BENOIT [CA]; MARINIER PAU) 23 September 2010 (2010-09-23) * abstract; figure 9 * * paragraph [0051] * * paragraph [0048] - paragraph [0049]; claims 1-6 * | 1,2,4-6, 9-12,14, 15 | INV. H04B7/06 |
| X | WO 2009/133805 A1 (NTT DOCOMO INC [JP]; KAWAI HIROYUKI [JP]; MORIMOTO AKIHITO [JP]; TAOKA) 5 November 2009 (2009-11-05) * paragraph [0080] - paragraph [0090]; figures 5,9 * * paragraph [0030] - paragraph [0054]; figures 3,4 * & EP 2 276 305 A1 (NTT DOCOMO INC [JP]) 19 January 2011 (2011-01-19) * paragraph [0030] - paragraph [0054]; figures 3,4 * * paragraph [0080] - paragraph [0090]; claims 1,2; figures 5,9 * | 1,3-6, 14,15 | |
| X | MOTOROLA: "Uplink SU-MIMO Design Options for LTE Advanced", 3GPP DRAFT; R1-090805, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318661, [retrieved on 2009-02-03] * paragraph [0002] * | 1,4,14, 15 | TECHNICAL FIELDS SEARCHED (IPC) H04B |

The present search report has been drawn up for all claims

| Place of search | Date of completion of the search | Examiner |
|---|---|---|
| Munich | 17 June 2011 | Burghardt, Gisela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 11 36 0003

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2011

| Patent document cited in search report | | Publication date | Patent family member(s) | | Publication date |
|---|---|---|---|---|---|
| WO 2010107699 | A2 | 23-09-2010 | US | 2010246516 A1 | 30-09-2010 |
| WO 2009133805 | A1 | 05-11-2009 | CN | 102077672 A | 25-05-2011 |
| | | | EP | 2276305 A1 | 19-01-2011 |
| | | | JP | 2009272829 A | 19-11-2009 |
| | | | KR | 20110009189 A | 27-01-2011 |
| | | | US | 2011092241 A1 | 21-04-2011 |

EPO FORM P0459

For more details about this annex : see Official Journal of the European Patent Office, No. 12/82